(19) Europäisches Patentamt
European Patent Office
Office européen des brevets

(11) **EP 3 103 914 A1**

(12) **EUROPEAN PATENT APPLICATION**
published in accordance with Art. 153(4) EPC

(43) Date of publication:
**14.12.2016 Bulletin 2016/50**

(51) Int Cl.:
*D06M 13/144* (2006.01)    *D06M 13/395* (2006.01)
*D06M 15/41* (2006.01)    *D06M 15/693* (2006.01)
*D06M 101/06* (2006.01)    *D06M 101/32* (2006.01)
*D06M 101/34* (2006.01)    *D06M 101/36* (2006.01)

(21) Application number: 15742539.8

(22) Date of filing: 03.02.2015

(86) International application number:
**PCT/JP2015/000469**

(87) International publication number:
**WO 2015/115119 (06.08.2015 Gazette 2015/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority:   03.02.2014   JP 2014018734

(71) Applicant: **NAGASE CHEMTEX CORPORATION
Osaka 550-8668 (JP)**

(72) Inventors:
• **FUJII, Satoru
Tatsuno-shi
Hyogo 679-4124 (JP)**

• **HOSOMI, Tetsuya
Tatsuno-shi
Hyogo 679-4124 (JP)**
• **FUSHIKI, Masato
Tatsuno-shi
Hyogo 679-4124 (JP)**
• **NAGANO, Toyohiro
Tatsuno-shi
Hyogo 679-4124 (JP)**

(74) Representative: **Hoffmann Eitle
Patent- und Rechtsanwälte PartmbB
Arabellastraße 30
81925 München (DE)**

(54) **ADHESIVE COMPOSITION FOR ORGANIC FIBERS, AND METHOD FOR TREATING ORGANIC FIBERS**

(57)    An object of the present invention is to provide an adhesive agent composition for an organic fiber, the adhesive agent composition having high adhesive force and not requiring the use of epoxy resin that is high in manufacturing cost.

The present invention relates to an adhesive agent composition for an organic fiber, the adhesive agent com-
position containing a halohydrin compound and a blocked isocyanate compound and also relates to a method of treating an organic fiber, the method including the step of treating the organic fiber with a treating agent containing the adhesive agent composition and a resorcin-formalin-rubber latex (RFL).

## Description

### Technical Field

The present invention relates to an adhesive agent composition for an organic fiber, the adhesive agent composition being used to produce the organic fiber used to reinforce rubber products, such as tires, various hoses, and belts (timing belts, conveyor belts, V belts, and the like) and also relates to a method of treating the organic fiber.

### Background Art

In rubber used for tires, various hoses, belts (timing belts, conveyor belts, V belts, and the like), and the like, an organic fiber such as a polyester fiber is used as a reinforcing material. For example, as a conventional treatment of sticking a water-based treating agent basically containing epoxy resin and a blocked isocyanate compound onto a polyester fiber for the purpose of bonding the rubber and the polyester fiber, dip in the water-based treating agent has been performed (PTL 1).

### Citation List

### Patent Literature

PTL 1: Japanese Laid-Open Patent Application Publication No. 08-035179

### Summary of Invention

### Technical Problem

Since epoxy resin includes a chlorine group in its molecule due to its production process, it is high in compatibility with a polyester fiber and the like and can easily obtain an adhesive effect. However, in recent years, such adhesive performance is not adequate in applications that require high fracture resistance, fatigue resistance, and durability. It is though that as a method of further improving an adhesive property, the amount of chlorine contained in resin is increased.
By increasing the amount of chlorine contained in the epoxy resin, the adhesive effect of the epoxy resin with the polyester fiber and the like can be further increased. However, the water solubility of the epoxy resin decreases as the amount of chlorine contained in the epoxy resin increases. Therefore, it becomes difficult to use such epoxy resin in a water-based treating agent described in PTL 1. Further, since a production process of the epoxy resin is complex, a manufacturing cost is high.
The present invention was made under these circumstances, and an object of the present invention is to provide an adhesive agent composition for an organic fiber, the adhesive agent composition being able to be used in a water-based treating agent, having high adhesive force, and not requiring the use of epoxy resin that is high in manufacturing cost.

### Solution to Problem

A first aspect of the present invention relates to an adhesive agent composition for an organic fiber, the adhesive agent composition including a halohydrin compound and a blocked isocyanate compound.
The first aspect of the present invention also relates to the adhesive agent composition that is a one liquid type adhesive agent composition.
It is preferable that the organic fiber be one selected from the group consisting of nylon fiber, rayon fiber, polyester fiber, and aramid fiber.
A second aspect of the present invention relates to a method of treating an organic fiber, the method including the step of treating the organic fiber with a treating agent containing the above adhesive agent composition for the organic fiber and a resorcin-formalin-rubber latex (RFL).
A third aspect of the present invention relates to a method of treating an organic fiber, the method including the steps of: (i) treating the organic fiber with the above adhesive agent composition for the organic fiber as a first treating agent; and (ii) treating the organic fiber, having been treated with the first treating agent, with a second treating agent containing a resorcin-formalin-rubber latex (RFL).
A fourth aspect of the present invention relates to an organic fiber treated by the above method.
A fifth aspect of the present invention relates to a tire, hose, or belt using the organic fiber treated by the above method.

**Advantageous Effects of Invention**

The present invention provides an adhesive agent composition for an organic fiber, the adhesive agent composition being able to be used in a water-based treating agent, having high adhesive force, and not requiring the use of epoxy resin that is high in manufacturing cost. The present invention also provides an organic fiber having high adhesive property with respect to rubber and high durability.

**Description of Embodiments**

Hereinafter, one example of a preferred embodiment of the present invention will be specifically explained.
An adhesive agent composition for an organic fiber according to the present invention includes a halohydrin compound and a blocked isocyanate compound.

**Halohydrin compound**

In the present invention, the halohydrin compound denotes a compound having a component part in which halogen and hydroxy group are bonded to respective carbons adjacent to each other.
One example of the halohydrin compound is a compound (halohydrin ether compound) obtained by a reaction between a polyhydric alcohol compound and epihalohydrins under an acidic condition.
In the present invention, polyhydric alcohol denotes alcohol having two or more hydroxyl groups in its molecule and is not especially limited. Examples of the polyhydric alcohol include: glycols, such as ethylene glycol, propylene glycol, polyethylene glycol, and polypropylene glycol; sugar alcohols, such as erythritol, xylitol, sorbitol, and maltitol; hydroxycarboxylic acids, such as dimethylol butanoic acid, tartaric acid, and glyceric acid; glycerin; diglycerine; polyglycerin; trimethylolpropane; trimethylolethane; and pentaerythritol.
Examples of epihalohydrins include epichlorohydrin and epibromohydrin.
The reaction between the polyhydric alcohol compound and epihalohydrins can be performed in such a manner that, for example, epihalohydrin is added to polyhydric alcohol in a temperature range of 50 to 150°C in the presence of a Lewis acid catalyst, such as boron trifluoride diethyl ether complex, tin tetrachloride, or aluminum chloride.
Among these examples, a reaction product of sugar alcohol such as sorbitol and epihalohydrins and a reaction product of polyglycerin and epihalohydrins are especially preferable since these are polyfunctional and high in water solubility.
The concentration of the halohydrin compound in the present invention is preferably 0.5 to 10 wt.% in a solution or dispersion, more preferably 0.7 to 5 wt.%. This is because: if the concentration is less than 0.5 wt.%, adhesive force decreases; and if the concentration exceeds 10 wt.%, this becomes a cause of application unevenness or gum-up.

**Blocked isocyanate compound**

In the present invention, the blocked isocyanate compound is a compound generated by a reaction between an isocyanate compound and a blocking agent and temporarily inactivated by a group derived from the blocking agent. When the blocked isocyanate compound is heated at a predetermined temperature, the group derived from the blocking agent is dissociated, and an isocyanate group is generated.
As the isocyanate compound, an isocyanate compound having two or more isocyanate groups in its molecule can be used. Examples of diisocyanate having two isocyanate groups include: hexamethylene diisocyanate; diphenylmethane diisocyanate; xylylene diisocyanate; isophorone diisocyanate; phenylene diisocyanate; tolylene diisocyanate; trimethylhexamethylene diisocyanate; metaphenylene diisocyanate; naphthalene diisocyanate; diphenyl ether diisocyanate; diphenyl propane diisocyanate; biphenyl diisocyanate; polymethylene polyphenyl polyisocyanate; isomers thereof; alkyl substituents thereof; halides thereof; and hydrogenated products obtained by hydrogenating benzene rings thereof. Further, triisocyanates having three isocyanate groups and tetraisocyanates having four isocyanate groups can be used. Each of these isocyanate compounds may be used alone, or a mixture of two or more of these isocyanate compounds may be used.
Among these examples, tolylene diisocyanate, metaphenylene diisocyanate, diphenylmethane diisocyanate, hexamethylene diisocyanate, and polymethylene polyphenyl polyisocyanate are especially preferable since these are industrially available, and excellent heat resistance can be obtained.
Examples of the blocking agent include: lactams, such as $\varepsilon$-caprolactam, $\delta$-valerolactam, $\gamma$-butyrolactam, and $\beta$-propiolactam; phenols, such as phenol, cresol, resorcinol, and xylenol; alcohols, such as methanol, ethanol, n-propyl alcohol, isopropyl alcohol, n-butyl alcohol, isobutyl alcohol, tert-butyl alcohol, ethylene glycol monoethyl ether, ethylene glycol monobutyl ether, diethylene glycol monoethyl ether, propylene glycol monomethyl ether, and benzil alcohol; oximes, such as formamidoxime, acetaldoxime, acetoxime, methyl ethyl ketoxime, diacetyl monoxime, benzophenone oxime, and cyclohexanone oxime; and active methylenes, such as dimethyl malonate, diethyl malonate, ethyl acetoacetate, methyl acetoacetate, and acetyl acetone. Among these examples, lactam, phenol, and oxime blocking agents are preferable since these blocking agents are quickly dissociated from the isocyanate compound at a relatively low temperature.

The content of the blocked isocyanate compound used in the present invention is preferably 50 to 500 parts by weight per 100 parts by weight of the halohydrin compound, more preferably 200 to 400 parts by weight. This is because: if the content is less than 50 parts by weight, the adhesive force may decrease; and if the content exceeds 500 parts by weight, the fiber may become too hard; or the gum-up of the solid content may occur at a treatment device.

**Components other than halohydrin compound and blocked isocyanate compound**

It is preferable that the adhesive agent composition for the organic fiber according to the present invention be a water-based composition, that is, contain water or a solvent containing water as a major component. The water or the solvent containing the water serves as a solvent that allows dissolution of the halohydrin compound and uniformly sticks the halohydrin compound and the blocked isocyanate compound to the organic fiber.

The adhesive agent composition for the organic fiber according to the present invention may contain the following optional component(s) according to need as long as the object and effects of the present invention are not inhibited. Examples of the optional component include resin copolymerizable with the halohydrin compound, a curing agent other than the blocked isocyanate compound, an organic thickener, an antioxidant, a light stabilizer, an adhesive property improver, a reinforcing agent, a softening agent, a coloring agent, a leveling agent, a flame retardant, and an antistatic agent.

Examples of the resin copolymerizable with the halohydrin compound include polyvinyl alcohol (PVA), aqueous acrylic resin, and aqueous polyurethane resin.

Examples of the curing agent other than the blocked isocyanate compound include modified polyamine, polyamide resin, polymercaptan resin, polysulfide resin, and carbodiimides.

Further, an antifoaming agent for preventing foaming, a wetting agent for improving an application property, a rubber latex, and the like may be added.

**Treating method**

A method of treating an organic fiber according to the present invention preferably includes the steps of: treating the organic fiber with the adhesive agent composition for the organic fiber according to the present invention as a first treating agent; and treating the organic fiber, having been treated with the first treating agent, with a second treating agent containing a resorcin-formalin-rubber latex (RFL) (two-bath treatment). Further, the method of treating the organic fiber according to the present invention may be a method (one-bath treatment) of treating the organic fiber with a treating agent containing the adhesive agent composition for the organic fiber according to the present invention and the resorcin-formalin-rubber latex (RFL).

The resorcin-formalin-rubber latex (RFL) can be prepared by mixing and aging of: an initial condensate of resorcin and formalin; and rubber latex.

The initial condensate of resorcin and formalin is obtained by a condensation reaction between a resorcin monomer and a formaldehyde monomer in water in the presence of: acid catalyst, such as hydrochloric acid or sulfuric acid; alkali metal hydroxide, such as sodium hydroxide; or ammonia.

In the initial condensate, the mole ratio of the resorcin monomer to the formaldehyde monomer is preferably 1 : 0.1 to 1 : 8, more preferably 1 : 0.5 to 1 : 5, and further preferably 1 : 1 to 1 : 4.

Examples of the rubber latex include natural rubber latex, styrene-butadiene copolymer latex, and styrene-butadiene-vinylpyridine copolymer latex. In the resorcin-formalin-rubber latex (RFL), a solid content ratio of the initial condensate of resorcin and formalin to the rubber latex is preferably 1 : 1 to 1 : 15, more preferably 1 : 3 to 1 : 12.

Each of these examples may be used alone, or a mixture of two or more of these examples may be used. Especially, the styrene-butadiene-vinylpyridine copolymer latex is preferable since high adhesive force with respect to natural rubber and SBR (styrene butadiene rubber) can be obtained.

The initial condensate of resorcin and formalin may contain the resorcin monomer, the formaldehyde monomer, a minute amount of molecular weight regulator (calcium chloride, for example), a solvent (methyl ethyl ketone (MEK), for example), and the like.

The following will specifically explain a case where the method of treating the organic fiber includes the steps of: treating the organic fiber with the adhesive agent composition for the organic fiber according to the present invention as the first treating agent; and treating the organic fiber, having been treated with the first treating agent, with the second treating agent containing the resorcin-formalin-rubber latex (RFL).

When the adhesive agent composition for the organic fiber according to the present invention is used as the first treating agent, it is preferable to prepare the first treating agent by dissolving the halohydrin compound and the blocked isocyanate compound in water.

The total solid content of the first treating agent is preferably 1 to 20 wt.%, more preferably 2 to 10 wt.%. This is because: if the total solid content is less than 1 wt.%, the amount of components of the first treating agent sticking to the organic fiber may become inadequate, and adequate adhesive force may not be obtained; and if the total solid content exceeds 30 wt.%, the amount of components of the first treating agent sticking to the organic fiber may become too large, and as a result, the obtained fiber may become too hard, or a gelled matter may be formed at the fiber or the treatment device.

The content of the blocked isocyanate compound used in the present invention is preferably 50 to 500 parts by weight per 100 parts by weight of the halohydrin compound, more preferably 200 to 400 parts by weight. This is because: if the content is less than 50 parts by weight, crosslinking may become inadequate, and this may become a cause of decreases in adhesive force and heat resistance; and if the content exceeds 500 parts by weight, the obtained fiber may become too hard, or this may become a cause of the gum-up.

The second treating agent is a composition containing the resorcin-formalin-rubber latex (RFL).

The total solid content of the second treating agent is preferably 5 to 50 wt.%, more preferably 10 to 35 wt.%. This is because: if the total solid content is less than 5 wt.%, the amount of components of the second treating agent sticking to the organic fiber may become small, and the adhesive force may become inadequate; and if the total solid content exceeds 50 wt.%, the obtained fiber may become too hard, and bending fatigue strength and the like may become low.

In addition to the initial condensate of resorcin and formalin and the rubber latex, vulcanization regulator, zinc oxide, antioxidant, antifoaming agent, and the like may be added to the second treating agent.

In the present invention, treating the organic fiber with the first treating agent denotes a treatment of sticking the first treating agent to the organic fiber, and this can be performed by using an arbitrary method, such as an application using a roller, spraying from a nozzle, or dip in a solution (first treating agent). After the treatment using the first treating agent, the organic fiber to which the first treating agent has stuck may be subjected to a drying treatment at 100 to 250°C for one to five minutes, and then, may be subjected to a heat treatment at 150 to 250°C for one to five minutes. The heat treatment is performed preferably at 180 to 240°C for one minute. If the temperature of the heat treatment is too low, the adhesive force may become inadequate. If the temperature of the heat treatment is too high, the organic fiber may deteriorate, and this may become a cause of strength degradation.

To prevent the obtained fiber from becoming too hard while obtaining adequate adhesive force, the amount of first treating agent sticking to the organic fiber is preferably 0.1 to 10 wt.%, more preferably 1 to 7 wt.% on the solid content basis.

In the present invention, treating the organic fiber with the second treating agent denotes a treatment of sticking the second treating agent to the organic fiber which has been treated with the first treating agent, and this treatment may be performed using the same means and conditions as the process of treating the organic fiber with the first treating agent.

To prevent the obtained fiber form becoming too hard while obtaining adequate adhesive force, the amount of second treating agent sticking to the organic fiber is preferably 0.1 to 10 wt.%, more preferably 0.5 to 5 wt.% on the solid content basis.

To adjust the amount of agent sticking to the organic fiber, each of the step of treating the organic fiber with the first treating agent and the step of treating the organic fiber with the second treating agent may further adopt a means, such as pressing by a press-contact roller, scraping by a scraper, blow-off by air blowing, suction, or beating by a beater.

**Organic fiber**

The adhesive agent composition for the organic fiber according to the present invention can be used for organic fibers normally used as reinforcing cords of tires, hoses, belts, and the like. Specific examples of such organic fibers include nylon fiber, rayon fiber, vinylon fiber, polyester fiber (such as polyethylene terephthalate (PET) and polyethylene naphthalate (PEN)), aramid fiber, and polyurethane fiber.

The organic fiber treated by the method of treating the organic fiber according to the present invention has an excellent adhesive property regarding adhesion between the rubber and the organic fiber. Thus, the adhesive agent component is preferably used for polyester fiber and aramid fiber among the above organic fibers especially since: the adhesion between the rubber and each of polyester fiber and aramid fiber by a conventional method is relatively difficult; and the mechanical strength of the obtained fiber becomes excellent.

The organic fiber according to the present invention may have any form, such as filament yarn, cord, woven stuff, or woven fabric.

For example, used as the polyester fiber is fiber prepared in such a manner that: polyethylene terephthalate having yarn viscosity of 0.95 is subjected to melt spinning and stretching to become multifilaments having 1,500 denier;

the multifilaments are firstly twisted 40 times per 10 cm to become a primary twisted cord; two primary twisted cords are finally twisted 40 times per 10 cm in an opposite direction to the primary twisted cord.

Further, for example, used as the aramid fiber is fiber prepared in such a manner that: 1,000 aromatic polyamide multifilaments (Kevlar produced by Du Pont Kabushiki Kaisha) having nominal fineness of 1,500 denier are firstly twisted 35 times per 10 cm to become a primary twisted cord; and two primary twisted cords are finally twisted 35 times per 10 cm in an opposite direction to the primary twisted cord.

**Use**

Conventionally, immediately before the water-based treating agent basically containing the epoxy resin and the blocked isocyanate compound is used to bond rubber and polyester fiber, the water-based treating agent needs to be prepared by mixing the epoxy resin and the water dispersion of the blocked isocyanate compound.

However, since the adhesive agent composition for the organic fiber according to the present invention has excellent storage stability, it can also be used as a one liquid type adhesive agent composition. In the case of using the adhesive agent composition for the organic fiber according to the present invention as the one liquid type adhesive agent composition, problems that may be caused in the case of using a two liquid type adhesive agent composition can be avoided. Examples of the problems that may be caused in the case of using the two liquid type adhesive agent composition include: a problem in which a crosslinking agent needs to be blended immediately before use, and therefore work is complicated; a problem in which adequate coating performance is not obtained if the mixing ratio is incorrect; and a problem in which since the adhesive force gradually decreases after the mixing of two liquids, a usable time is limited, and a paint left over needs to be discarded. It should be noted that the one liquid type adhesive agent composition denotes an adhesive agent composition which: does not require mixing of curing resin as a main agent with the crosslinking agent immediately before use; and can be preserved for a long period of time in a state where the curing resin as the main agent and the crosslinking agent are mixed and sealed, and for example, can be used as adhesive even after two years or more.

By using the organic fiber treated with the adhesive agent composition for the organic fiber according to the present invention in tires, hoses, and belts, fracture resistance, fatigue resistance, and durability can be improved.

**EXAMPLES**

The present invention will be explained in more detail using Examples below. However, the present invention is not limited to these Examples. In the following explanation, "part(s)" and "%" denote "part(s) by weight" and "wt.%", respectively unless otherwise specified.

**Example 1**

50 g of sorbitol was dispersed in 50 g of toluene, and 1 g of boron trifluoride diethyl ether complex was added thereto. 60 g of epichlorohydrin was added thereto for two hours at 60 to 70°C while stirring the mixture. Thus, a reaction was performed. Disappearance of epichlorohydrin was confirmed by a titration method described in JIS K 7236. The toluene used as the solvent was removed by vacuum concentration. As a result, a sorbitol chlorohydrin compound was obtained.

12.5 g of the obtained sorbitol chlorohydrin compound was added as the halohydrin compound to 950g of water while stirring the water, and 75 g of ε-caprolactam blocked diphenylmethane diisocyanate water dispersion (concentration of 50%) was added thereto as the blocked isocyanate compound. Thus, the adhesive agent composition for the organic fiber was prepared as the first treating agent.

**Evaluation of adhesive property**

172 g of Nipol 2518FS (vinylpyridine-styrene-butadiene terpolymer water emulsion liquid produced by Zeon Corporation, total solid content of 40.5%) and 73 g of Nipol LX-112 (styrene-butadiene copolymer 41% water emulsion liquid produced by Zeon Corporation, total solid content of 40.5%) were diluted as the rubber latex in 76 g of water. 270 g of a resorcin-formalin initial condensate dispersing liquid (mole ratio of resorcin to formaldehyde of 1 : 1.5, total solid content of 6.5%) was added as resorcin-formalin to this diluent while slowly stirring the diluent. Thus, a RFL liquid was prepared. The obtained RFL liquid was diluted in 591 g of water. Thus, the second treating agent (total solid content of 10%) was prepared.

As the polyester fiber, a polyester cord (1,500 denier, two twisted cords, primary twisting of 40 times per 10 cm, final twisting of 40 times per 10 cm) was dipped in the first treating agent. The polyester cord was then dried at 150°C for 130 seconds and was further subjected to a heat treatment at 240°C for 130 seconds. Next, the polyester cord was dipped in the second treating agent. The polyester cord was then dried at 150°C for 130 seconds and was further subjected to the heat treatment at 240°C for 70 seconds.

Based on "Test methods for chemical fiber tire cords" of JIS L 1017, the treated polyester cord was embedded in unvulcanized rubber containing natural rubber as a major component and was subjected to press vulcanization at 150°C for 30 minutes. Next, the polyester cord was pulled out from a rubber block at a speed of 350 mm/minute. Force required for the pulling-out was shown by N/cm. Thus, the adhesive property was evaluated. Results are shown in Table 1.

**Example 2**

1 g of boron trifluoride diethyl ether complex was added to 30 g of glycerin. 60 g of epichlorohydrin was added thereto for two hours at 60 to 70°C while stirring the mixture. Thus, a reaction was performed. Disappearance of epichlorohydrin was confirmed by the titration method described in JIS K 7236. As a result, a glycerin chlorohydrin compound was obtained.

The adhesive property was evaluated in the same manner as in Example 1 except that 12.5 g of the obtained glycerin chlorohydrin compound was used as the halohydrin compound instead of the sorbitol chlorohydrin compound. Results are shown in Table 1.

**Example 3**

1 g of boron trifluoride diethyl ether complex was added to 40 g of ethylene glycol. 60 g of epichlorohydrin was added thereto for two hours at 60 to 70°C while stirring the mixture. Thus, a reaction was performed. Disappearance of epichlorohydrin was confirmed by the titration method described in JIS K 7236. The mixture was reacted with 60 g of epichlorohydrin. As a result, a glycerin chlorohydrin compound was obtained.

The adhesive property was evaluated in the same manner as in Example 1 except that 12.5 g of the obtained ethylene glycol chlorohydrin compound was used as the halohydrin compound instead of 12.5 g of the sorbitol chlorohydrin compound. Results are shown in Table 1.

**Comparative Example 1**

The adhesive property was evaluated in the same manner as in Example 1 except that EX-614 (sorbitol polyglycidyl ether produced by Nagase ChemteX Corporation) that was the epoxy resin was used instead of the sorbitol chlorohydrin compound that was the halohydrin compound. Results are shown in Table 1.

**Comparative Example 2**

The adhesive property was evaluated in the same manner as in Example 1 except that EX-313 (glycerol polyglycidyl ether produced by Nagase ChemteX Corporation) that was the epoxy resin was used instead of the sorbitol chlorohydrin compound that was the halohydrin compound. Results are shown in Table 1.

**Comparative Example 3**

The adhesive property was evaluated in the same manner as in Example 1 except that EX-811 (ethylene glycol diglycidyl ether produced by Nagase ChemteX Corporation) that was the epoxy resin was used instead of the sorbitol chlorohydrin compound that was the halohydrin compound. Results are shown in Table 1.

Table 1

| | | Example 1 | Example 2 | Example 3 | Comparative Example 1 | Comparative Example 2 | Comparative Example 3 |
|---|---|---|---|---|---|---|---|
| Weight ratio of components in first treating agent | sorbitol chlorohydrin compound | 1.25 | 0 | 0 | 0 | 0 | 0 |
| | glycerin chlorohydrin compound | 0 | 1.25 | 0 | 0 | 0 | 0 |
| | ethylene glycol chlorohydrin compound | 0 | 0 | 1.25 | 0 | 0 | 0 |
| | sorbitol polyglycidyl ether | 0 | 0 | 0 | 1.25 | 0 | 0 |
| | glycerol polyglycidyl ether | 0 | 0 | 0 | 0 | 1.25 | 0 |
| | ethylene glycol diglycidyl ether | 0 | 0 | 0 | 0 | 0 | 1.25 |
| | $\varepsilon$-caprolactam MDI (blocked isocyanate) | 3.75 | 3.75 | 3.75 | 3.75 | 3.75 | 3.75 |
| Total solid content of second treating agent (wt.%) | resorcin-formalin-rubber latex | 10 | 10 | 10 | 10 | 10 | 10 |
| Adhesive property | Adhesive force (N/cm) | 160 | 160 | 155 | 150 | 140 | 110 |

As is clear from the Examples, the adhesive agent composition for the organic fiber according to the present invention can be used in the water-based treating agent. Further, as is clear from Table 1, as compared to a case (Comparative Example 1) where the epoxy resin is used, the adhesive agent composition for the organic fiber according to the present invention using the halohydrin compound is high in adhesive force and excellent in adhesive property.

**Evaluation of stability**

The storage stability by the sorbitol chlorohydrin compound obtained in Example 1 and the storage stability by EX-614 (sorbitol polyglycidyl ether produced by Nagase ChemteX Corporation) that was the epoxy resin used in Comparative Example 1 were evaluated.

The adhesive force of the water-based treating agent basically containing the epoxy resin and the blocked isocyanate compound decreases mainly because a functional group residual ratio decreases due to water or a solvent containing water as a major component. Therefore, the evaluation was made using aqueous solutions prepared as below.

The sorbitol chlorohydrin compound obtained in Example 1 was added to water and dissolved by stirring for 30 minutes. Thus, a 10 wt.% test aqueous solution was prepared. Further, EX-614 that was the epoxy resin was added to water and dissolved by stirring for 30 minutes. Thus, a 10 wt.% test aqueous solution was prepared. A chlorohydrin value of the former test aqueous solution was measured by the titration method described in JIS K 7243-2 before the test aqueous solution was left at rest. An epoxy value of the latter test aqueous solution was measured by the titration method described in JIS K 7236 before the test aqueous solution was left at rest. Then, these test aqueous solutions were left at rest at a room temperature (25°C) and 40°C. After these test aqueous solutions were left at rest for 48 hours, the chlorohydrin value and the epoxy value were measured in the same manner as above. Then, the functional group residual ratio (%) was calculated based on the following formula. Results are shown in Table 2.

$$\text{Functional group residual ratio (\%)} = \text{chlorohydrin value (epoxy value) after solution}$$

$$\text{is left at rest / chlorohydrin value (epoxy value) before solution is left at rest} \times 100$$

Table 2

| Test aqueous solution | Elapsed Time | Functional group residual ratio (%) (25°C) | Functional group residual ratio (%) (40°C) |
|---|---|---|---|
| sorbitol chlorohydrin compound | 48 hours | 99 | 97 |
| sorbitol polyglycidyl ether | 48 hours | 92 | 75 |

Regarding the sorbitol chlorohydrin compound that is the halohydrin compound, most of the functional groups remain even after 48 hours. In contrast, regarding the sorbitol polyglycidyl ether that is the epoxy resin, the functional group residual ratio after 48 hours at 40°C is 75%. Thus, there is a significant difference therebetween regarding the storage stability in water.

**Claims**

1. An adhesive agent composition for an organic fiber,
   the adhesive agent composition comprising a halohydrin compound and a blocked isocyanate compound.

2. The adhesive agent composition according to claim 1, wherein the adhesive agent composition is a one liquid type adhesive agent composition.

3. The adhesive agent composition according to claim 1 or 2, wherein the organic fiber is one selected from the group consisting of nylon fiber, rayon fiber, polyester fiber, and aramid fiber.

4. A method of treating an organic fiber,
   the method comprising the step of treating the organic fiber with a treating agent containing the adhesive agent composition according to any one of claims 1 to 3 and a resorcin-formalin-rubber latex (RFL).

5. A method of treating an organic fiber,
the method comprising the steps of:

(i) treating the organic fiber with the adhesive agent composition according to any one of claims 1 to 3 as a first treating agent; and
(ii) treating the organic fiber, having been treated with the first treating agent, with a second treating agent containing a resorcin-formalin-rubber latex (RFL).

6. The method according to claim 4 or 5, wherein the organic fiber is one selected from the group consisting of nylon fiber, rayon fiber, polyester fiber, and aramid fiber.

7. An organic fiber treated by the method according to any one of claims 4 to 6.

8. A tire, hose, or belt using the organic fiber according to claim 7.

## INTERNATIONAL SEARCH REPORT

| International application No. |
| --- |
| PCT/JP2015/000469 |

A.   CLASSIFICATION OF SUBJECT MATTER
*D06M13/144*(2006.01)i, *D06M13/395*(2006.01)i, *D06M15/41*(2006.01)i,
*D06M15/693*(2006.01)i, *D06M101/06*(2006.01)n, *D06M101/32*(2006.01)n,
*D06M101/34*(2006.01)n, *D06M101/36*(2006.01)n
According to International Patent Classification (IPC) or to both national classification and IPC

B.   FIELDS SEARCHED

Minimum documentation searched (classification system followed by classification symbols)
D06M13/00-15/715

Documentation searched other than minimum documentation to the extent that such documents are included in the fields searched
    Jitsuyo Shinan Koho      1922-1996   Jitsuyo Shinan Toroku Koho   1996-2015
    Kokai Jitsuyo Shinan Koho   1971-2015   Toroku Jitsuyo Shinan Koho   1994-2015

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br>A | JP 4-2887 A  (Teijin Ltd.),<br>07 January 1992 (07.01.1992),<br>examples 1 to 4<br>(Family: none) | 1-3,5-8<br>4 |
| X<br>A | JP 9-132870 A  (Teijin Ltd.),<br>20 May 1997 (20.05.1997),<br>examples 1 to 4<br>(Family: none) | 1-3,5-8<br>4 |

☒  Further documents are listed in the continuation of Box C.      ☐  See patent family annex.

\*    Special categories of cited documents:
"A"    document defining the general state of the art which is not considered   to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
| --- | --- |
|    21 April 2015 (21.04.15) |    28 April 2015 (28.04.15) |

| Name and mailing address of the ISA/ | Authorized officer |
| --- | --- |
|    Japan Patent Office<br>   3-4-3,Kasumigaseki,Chiyoda-ku,<br>   Tokyo 100-8915,Japan | <br><br>Telephone No. |

Form PCT/ISA/210 (second sheet) (July 2009)

**INTERNATIONAL SEARCH REPORT**

| International application No. |
| --- |
| PCT/JP2015/000469 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 8-100165 A  (Toray Industries, Inc.),<br>16 April 1996 (16.04.1996),<br>claims; paragraph [0032]<br>& EP 695793 A2<br>claims; page 5, line 58 to page 6, line 1<br>& JP 2001-159080 A      & US 5624765 A<br>& DE 69520814 D       & DE 69520814 T<br>& AU 2728795 A        & AU 685286 B<br>& TR 960103 A         & CA 2155088 A<br>& CN 1128283 A        & KR 10-0394909 B<br>& ZA 9506416 A        & CA 2155088 A1 | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8035179 A